**Europäisches Patentamt**

**European Patent Office**

**Office européen des brevets**

(19)

(11) Veröffentlichungsnummer : **0 473 555 A2**

(12) # EUROPÄISCHE PATENTANMELDUNG

(21) Anmeldenummer : **91830333.0**

(22) Anmeldetag : **25.07.91**

(51) Int. Cl.⁵ : **F17C 1/00, F17C 5/02, F17C 7/04, F17C 13/04, F16K 1/30, F16K 27/00, B60K 15/03**

(30) Priorität : **31.07.90 IT 4819890**
**31.07.90 IT 4819990**
**26.04.91 IT 28291**

(43) Veröffentlichungstag der Anmeldung :
**04.03.92 Patentblatt 92/10**

(84) Benannte Vertragsstaaten :
**AT BE CH DE DK ES FR GB GR LI LU NL SE**

(71) Anmelder : **I.CO.M. S.r.L.**
**Reynolds 2467**
**I-04012 Cisterna di Latina (IT)**

(72) Erfinder : **Cippitani, Luciano**
**Via Reynolds 2467**
**Cisterna di Latina (IT)**

(74) Vertreter : **Sneider, Massimo et al**
**Lenzi & C. Via Lucania, 13**
**I-00187 Roma (IT)**

(54) **Verbesserungen an den Flüssiggasbehältern und dem dazugehörigen Verteilungsventil insbesondere für Wohnmobil u.dgl.**

(57)     Ein Gegenstand der vorliegenden Erfindung ist eine Verbesserung an den Behältern und im besonderen an den Flüssiggasbehältern .

Nach den vorliegenden Verbesserungen wird im Behälter 4 ein Raum 9 beliebiger vorbestimmter Kapazität geschaffen, in dem die Flüssigkeit und das von der Verdampfung der Flüssigkeit verursachte Gas sei es durch normale Verdampung sei es während der Auffüllung des Behälters aufgenommen werden kann .

Es sind auch Ventile 14,32 vorgesehen , welche ausser die Verwendung eines Behälters für eine Anlage sei es für Selbstantrieb sei es für verschiedene Borddienstleistungen zu ermöglichen die Verwendung in Sicherheit der Anlage selbst gestatten .

EP 0 473 555 A2

Verbesserungen an den Flüssiggasbehältern und dem dazugehörigen Verteilungsventil insbesondere für Camper u.dgl. .

Gegenstand der vorliegenden Erfindung sind Verbesserungen an den Flüssiggasbehältern und an den Verteilungsventilen für das Flüssiggas , insbesondere für den Selbstantrieb , und eine Verwirklichung dieser besonders für Camper u.dgl. geeigneten Verbesserungen .

Es ist bekannt , dass beim Selbstantrieb im allgemeinen und im besonderen in Campers , Campingwagen , Wohnwagenanhängern u.dgl. häufig Flüssiggas sei es als Treibstoff für den Antrieb der Motoren sei es für den Betrieb anderer Anlagen gebraucht wird . Weiters kann der im Behälter enthaltene Treibstoff zum Beispiel durch eine unerwartete Temperaturerhöhung einer Druckerhöhung unterliegen , welche in den schlimmsten Fällen das Platzen des Behälters bewirken kann .

Ein Gegenstand der vorliegenden Erfindung ist eine Verbesserung an den Behältern und im besonderen an den Flüssiggasbehältern , nach der es möglich ist im Behälter selbst einen Raum beliebiger vorbestimmter Kapazität zu schaffen , in dem das von der Verdampfung der Flüssigkeit verursachte Gas und/oder die Flüssigkeit sei es bei ihrer Verdampfung sei es während der Auffüllung des Behälters aufgenommen werden kann .

Ein anderer Gegenstand der vorliegenden Erfindung sind Ventile , welche ausser die Verwendung eines Behälters wie jener beschriebene oder ähnlicher Behälter gemeinsam mit einer besonderen Anlage zu ermöglichen die Verwendung in Sicherheit der Anlage gestatten .

Um eine genaue Angabe über die möglichen Anwendungen zu machen wird nachstehend ein Beispiel der möglichen Verwirklichungen des Vorbeschrieben mit besonderen Anpassungen für den Betrieb bei einem Camper erläutert .

Der Behälter der vorliegenden Erfindung ist im wesentlichen aus zwei Abteilen oder Grundbehältern gebildet , welche untereinander mittels eines eigens dazu gedachten Flansches oder Ringes vereinigt sind , derart um ein alleiniges Ganzes zu bilden .

Einer der Behälter oder Abteile , jener mit der grösseren Kapazität , kann vermittels eines Sicherheitsventiles in den anderen Behälter oder Abteil abfliessen lassen .

Erfindungsgemäss wird die Vereinigung zwischen den beiden zu solidarisierenden Behältern mit Hilfe einer Art von Flansch oder Ring getätigt , welcher gebildet ist aus zwei zylindrischen Teilen von Aussendurchmesser im wesentlichen gleich dem Innendurchmessere des Körpers , an dem jeder von diesen angebracht werden muss , und aus einem Teil von Aussendurchmesser gleich oder grösser als der Aussendurchmesser des vorgenannten Körpers . Der mach aussen des Körpers, gewandte Teil geringeren Durchmessers endet mit einer z.B. die Haube des Behälters bildenden geschlossenen Oberfläche oder vereint sich mit einen zweiten Körper oder Behälter . Die Einführung des Ringes in oder auf jeden dieser Körper oder Behälter bewirkt die Bildung einer ringförmigen Aushöhlung gleich der Dicke des Körpers,, welcher den Ring aufnimmt , welche Ausnehmung bzw. Aushöhlung dazu bestimmt ist eine Schweissnaht eines jeden Körpers am Ring aufzunehmen , indem die einwand- freie Dichtung des Ganzen auch bei viel höheren Drücken als die Betriebsdrücke gewährleistet wird.

Wie vorstehend angedeutet um eine optimale Verwendung des Behälters zu gestatten wurde ein insbesondere für Flüssiggasbehälter geeignetes Verteilungsventil sowie eine Anlage erdacht , welches dieses verwendet , welches Ventil , im Anschluss an den Eintritt in ein zweites Abteil des Flüssiggases , welches sich im ersten Abteil befindet , durch ein normales Tanken , durch eine Druckerhöhung oder andere Ursache , die Verwendung des Flüssiggases im Motor gestattet , wenn jenes im ersten Behälter enthaltene auf- gebraucht ist oder einen vorbestimmten Pegel erreicht hat . Mit anderen Worten , wenn durch die Wirkung eines beliebig hervorgerufenen Überdruckes das Flüssiggas über das Sicherheitsventil vom ersten Behälter zum anderen fliesst , wird im zweiten Behälter eine Druckerhöhung zum Entstehen kommen . Das vorgenannte Verteilungsventil gestattet den Zufluss des Flüssiggases vom ersten Behälter zum Motor solange es sich in einer von den Drücken abhängigen Lage befindet , welche im ersten und im zweiten Behälter herrschen . Wenn der im zweiten Behälter bestehende Druck jenen im ersten bestehenden übertrifft , dann verstellt sich das gegen den Druck eines jeden der Behälter empfindliche Verteilungsventil und verursacht somit die Speisung des Motors vonseiten des Flüssiggases des zweiten Behälters .

Der beschriebene Behälter und das beschriebene Ventil haben eine sehr nützliche Anwendung bei einer für Borddienstleistungen und Selbsttraktion kombinierten Flüssiggasanlage gefunden , welche aus einer eigens dazu erdachten Ventilgruppe besteht , welches die vorstehend beschriebenen Prinzipien verfolgt und an einen Zweikammerbehälter angeschlossen ist , an dem bei einer bevorzugten Lösung eine waagecht angeordnete herkömmliche Gasflasche angeschlossen ist .

Was bisher angeführt wurde , wird aus der nachstehenden ausführlichen Beschreibung einer Ausführungsform der angedeuteten Verbesserungen unter Bezugnahme auf die anliegenden Zeichnungen besser zu verstehen sein . In den Zeichnungen selbst zeigen :

Figur 1 im Schnitt das Vereinigungsmittel oder Ring zwischen zwei Abteile eines Flüssiggasbehälters ;

Figur 2 im Schnitt in grösserem Massstab ein Detail des Verbindungsmittels gemäss Figur 1 ;

Figur 3 im Schnitt einen für Flüssiggas bestimmten Behälter für Selbstantrieb und für die Speisung der verschiedenen Dienstleistungen ;

Figur 4,4′ und 4″ im Schnitt einen Behälter , welcher dazu bestimmt ist Flüssiggas zu enthalten , zum Gebrauch bei Selbstantrieb mit Sicherheitsventil ;

Figur 5 die Anlage und das Verteilungsventil in Verwendungsstellung des ersten Behälters oder Hauptbehälters ;

Figur 6 die Anlage und das Verteilungsventil in Verwendungsstellung des zweiten Behälters oder Reservebehälters ;

Figur 7 eine Durchschnittsansicht eines bevorzugten Systems der Anlage ;

Figur 8 una Ansicht der vollständigen Anlage ;

Figur 9 eine Explosionsdarstellung der Ventilgruppe ;

Figur 10 eine Explosionsdarstellung des Absperrventils .

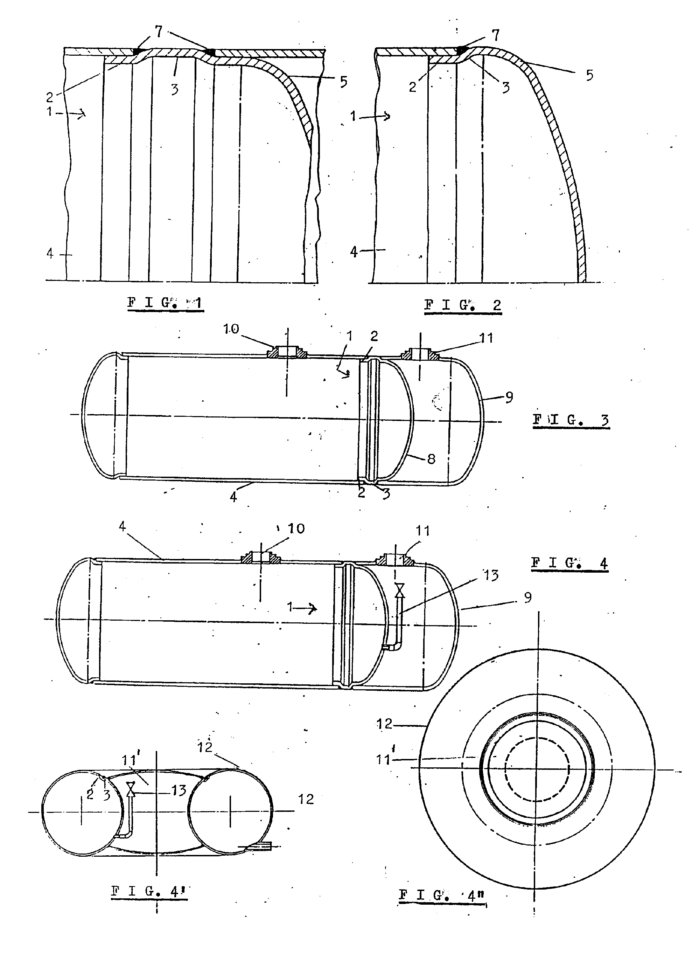

Bezugnehmend auf die Zeichnungen und insbesondere auf die Figuren 1 und 2 besteht das Vereinigungsmittel , oder Element , von zwei Behälterteilen aus einem allgemein mit dem Bezugszeichen 1 angegebenen Ring , welcher aus wenigstens zwei Teilen 2 und 3 mit untereinander unterschiedlichen Aussendurchmessern gebildet ist . Die beiden Teile 2 und 3 bilden erfindungsgemäss einen alleinigen Komplex und haben angesichts ihrer Anschlussfunktion gleiche oder mit dem den Behälter 4 bildenden Material verträgliche physikalische und chemische Eigenschaften . Zweckdienlicherweise und wie aus den Zeichnungen hervorgeht , ist der Ring 1 normalerweise aus zwei äusseren Teilen 2 gebildet , zwischen denen der Teil 3 interponiert ist .

Jeder Teil 2 hat einen Aussendurchmesser gleich oder geringfügig kleiner als der Innendurchmesser des Behälterteiles 4 , in welchem er gelagert werden soll , während der Mittelteil 3 einen Aussendurchmesser vorzugsweise gleich dem Aussendurchmesser des Behälters 4 hat . Wenn man vom Durchmesser spricht , so ist nur das Aussen- oder Innenmass des Teiles zu verstehen , auf den man sich bezieht , da dieser jegliche Form annehmen kann , welche es ihm ermöglicht sich mit der äusseren und/oder inneren Form des Behälters zu vereinen .

Wie insbesondere aus der Figur 2 zu entnehmen ist , kann einer der Teile 2 des Ringes 1 die Form einer kompletten integralen Wand 5 annehmen , welche eine Grundwand des Behälters bildet , oder , wie man in der Figur 1 sieht , kann in oder auf einen anderen Teil des Behälters 4 geschoben werden . Dies gestattet es einen Behälter zu Bilden , indem von einem rohrförmigen Element beliebigen Querschnittes ausgegangen wird , und diesen mit einer Bodenscheibe 6 zu versehen (siehe z.B. die Figur 3) oder zwei Teile desselben rohrförmigen Elementes 4 miteinander zu verbinden (wie in der Figur 4 gezeigt) .

Der Aussendurchmesser des Teiles 3 des Ringes 1 ist zumindest gleich dem Aussendurchmesser des Behälters 4 wie bereits erwähnt . Der zwischen der Flanke des Teiles 3 und dem Endabschnitt der Wand des Behälters 4 resultierende Raum ist wie in der Figur 2 dargestellt mit einer Raupe oder Naht 7 aus für den Zweck geeigneten Material ausgefüllt . Diese aus dem Material 7 gebildete Naht ist so beschaffen um die Kontinuität der Teile 4 und 5 wieder zu erstellen , indem jeglicher Austritt des Inhaltes sowohl flüssiger als auch gasförmiger Natur auch bei einem viel höheren Druck als der Betriebsdruck verhindert wird .

Wie insbesondere in der Figur 3 gezeigt , ist der Behälter 4 mit einer Flansche 1 vervollständigt , deren Teil 2 nach aussen des Behälters durch eine Wand 8 vervollständigt ist und an welchen Flanschteil 2 ein zweiter Behälter 9 in der vorstehend angegebenen Weise geschweisst.

Bei der insbesondere für Selbstantrieb und Borddienstleistungen geeigneten Ausführung , wie diese in der Figur 3 dargestellt ist , entsteht mit der Annahme des Behälters 9 ein Doppelbehälter jeweils mit dem dazugehörigen Anschlussstutzen 10,11 . Der Behälter 9 wird also einen Raum für das für die Dienstleistungen bestimmte Gas bilden und welcher auch vom Gas gespeist werden kann , welches sich im Behälter 4 bildet .

Falls jedoch das im Behälter enthaltene Flüssiggas nur für einen Selbstantriebsgebrauch bestimmt ist , wie dies in der Figur 4 bezeigt ist , dann bildet der Behälter 9 einen Sicherheitsraum 13 , welcher die beiden Behälter in Verbindung setzt , indem vom Behälter 4 zum Behälter 9 eine Umfüllung des Gases ermöglicht wird , welches durch die Wirkung von Temperaturerhöhungen im Überschuss vorhanden ist .

In jedem Fall ist die Form des Behälters zum Zwecke der Erfindung uneinflussreich , wie man aus den Figuren 4′ und 43 entnehmen kann , wo der Behälter toroidförmig gestaltet ist . Mittels des Ringes 1 ist der mittlere Raum 11 nach aussen von der Wand 12 zweckdienlich geschlossen , welche vom Flügel 2 der Flansche 1 ausgeht und welche vermittels des Teiles 3 sich fest mit dem Teil 4 des Behälters 12 verbindet , derart um den gewünschten Sicherheitsraum zu bilden . Auch in diesem Fall ist ein Sicherheitsventil 10 vorgesehen .

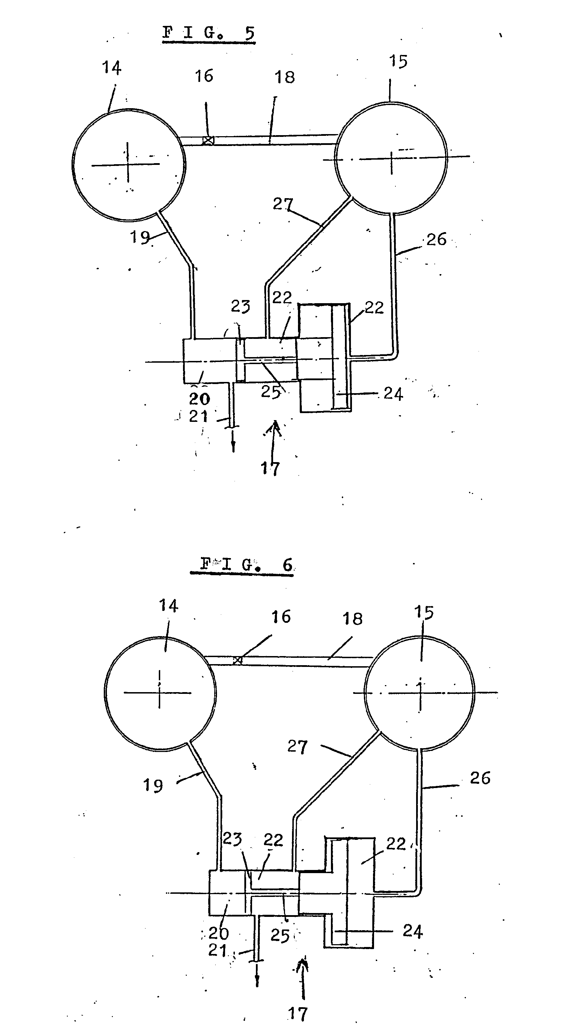

Wie vorstehend angedeutet ist in den Figuren 5 und 6 in zwei unterschiedlichen Verwendungsstellungen eine mögliche Anlage sowie das Verteilungsventil gezeigt . Bezugnehmend auf diese Zeichnungen besteht die Anlage in ihrer Gesamtheit aus einem ersten Behälter 14 , aus einem zweiten Behälter 15 , aus einem Sicherheitsventil 16 und aus einem ganz allgemein mit dem Bezugszeichen 17 angegebenen Verteilungsventil , wobei in den Kammern 20 und 22 des alleinigen Zylinders , welcher dieses bildet , sich zwei untereinander mittels einer Stange 25 verbundene Kolben 23 und 24 bewegen .

Die beiden Behälter 14 und 15 sind wie gesagt vermittels einer Leitung 18 und des dazugehörigen Sicherheitsventils 16 untereinander verbunden , weshalb durch eine Druckerhöhung des Flüssiggases im Behälter 14 das Flüssiggas vom Behälter 14 zum Behälter 15 fliesst . Im letzteren hat man somit einen Druck , welche dazu neigt mit der Zunahme der Flüssiggasmenge in ihm sich zu erhöhen .

Der nicht gezeigte Motor wird gespeist über die Leitung 21 vom Behälter 14 vermittels der Leitung 19 und der Kammer 20 des Verteilungsventils 17 . Die Kammer 22 des Verteilunsventils 17 steht ihrerseits vermittels der Leitung 26 unter dem Druck des im Behälter 15 vorhandenen Flüssiggases . Vom Behälter 15 geht weiters eine zweite Leitung 27 aus , welche den Behälter 15 mit dem Teil der Kammer verbindet , welcher sich zwischen den gegenüberliegenden Stirnflächen der Kolben 23 und 24 befindet .

Wenn eine Druckabnahme im Behälter 14 eintritt , oder in jeden Fall ein Überwiegen des im Behälter 15 vorhandenen Druckes gegenüber dem im Behälter 14 herrschenden Druckes , dann verstellen sich die Kolben 22 und 23 wie in der Fig.6 veranschaulicht , indem der Ausfluss des Flüssiggases vermittels der Leitung 19 verhindert wird . Die Speisung des Motors erfolgt dann vermittels der Leitung 27 , der Kammer 22 und der Leitung 21 mit dem im Behälter 15 vorhandenen Flüssiggas .

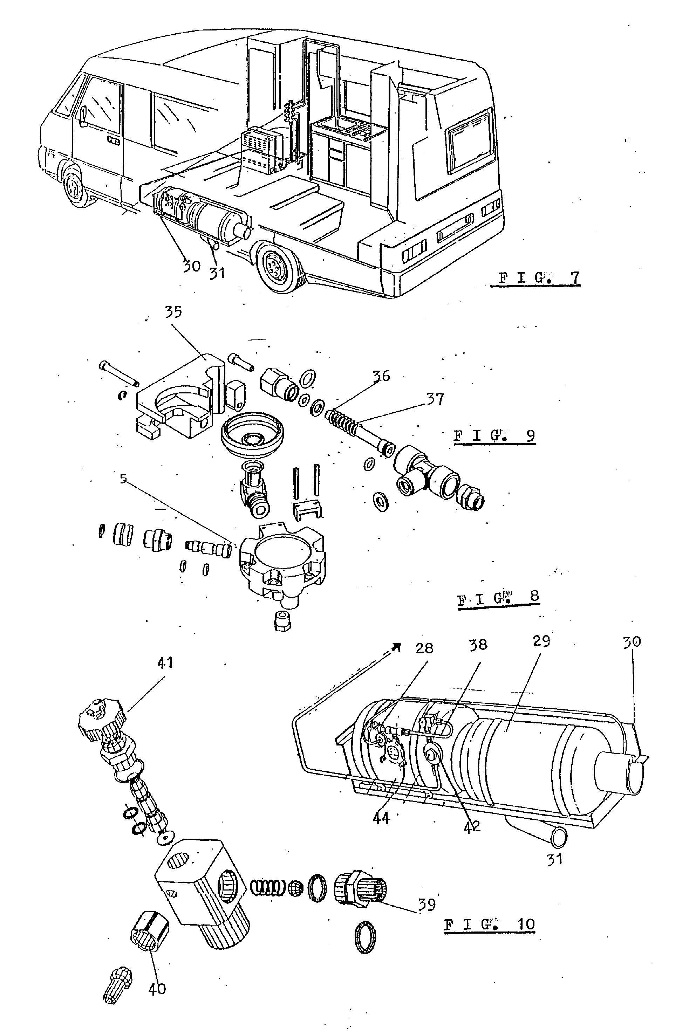

Was bisher beschrieben wurde , wurde mit zweckdienlichen Abänderungen für die Verwirklichung eines Flüssiggasbehälters für Borddienste und Selbstantrieb mit der dazugehörigen in den Figure 7 bis 10 erläuterten Ventilgruppe angewandt .

Bezugnehmend auf diese Figuren besteht der für Borddienste und Selbstantrieb und dazugehörige Ventilgruppe kombinierte Flüssiggasbehälter aus einem Behälter 28 , welcher in seinem Inneren einen Raum zweckdienlichen Fassungsvermögens aufweist , in dem das von der Verdampfung der Flüssigkeit hervorgerufene Gas aufgenommen wird.

Dank der Eigenschaft dieses Behälters einen Raum zu haben , welcher es der Flüssigkeit gestattet zu vergasen , ist es möglich der Flüssiggasanlage eine herkömmliche Gasflasche 29 zuzuordnen , welche wie ersichtlich in waagrechter Lage angeordnet ist ; um die Bedeutung dieser Lösung besser zu erkennen ist es angebracht zu erwähnen , dass eine waagrechte Anordnung der Gasflasche 29 unmöglich wäre ohne einen Behälter , welcher es der Flüssigkeit ermöglicht zu vergasen , und für den Fall , dass das in der Flasche enthaltene Gas nicht vergast , würde sich die Anlage z.B. im Camper mit leicht denbaren Folgeerscheinungen mit Flüssigkeit füllen . Wie vorstehend angedeutet , erbringt die Lösung den Flüssiggasbehälter gemeinsam mit der Flasche in waagrechter Lage anzuordnen erhebliche Vorteile ; bei an einigen meist verbreiteten Fahrzeugen angestellten Nachforschungen hat sich herausgestellt , dass die bevorzugte Lage für die Anordnung der in Frage stehenden Anlage jene ist , wie diese in der Figur 7 der Zeichnungen gezeigt ist . Um eine zweckmässige , sichere und den gesetzlichen Bestimmungen entsprechende Anordnung der Anlage zu ermöglichen wurde eine mit dem Rahmen des Fahrzeuges fest verbundene Wanne 30 erdacht , auf der der Behälter mit der gesamten Ventilgruppe und die Flasche angeordnet werden , wobei diese Wanne 30 sowohl die beschriebene Aufgabe hat die Anlage abzustützen als auch die Funktion hat diese vor der von der Auspuffanlage 31 ausstrahlenden Hitze zu schützen , wie auch vor Schmutz , vor Schlamm , vor Regen , usw. , welche mit der Anlage in Berührung kommen könnten . Der Raum , in dem die Anlagre untergebracht ist , ist nach aussen hin naheliegenderweise mit einem besonderen Deckel verschlossen , welcher mit dem Wagenaufbau ausgerichtet ist , und bei Abwesenheit der Gasflasche kann dieser Raum auch für andere Zwecke verwendet werden .

In der Figur 8 ist es möglich die Anlage in ihrer bevorzugten Lösung und Anordnung zu sehen , welche mit der Ventilgruppe vervollständigt ist .

In der Figur 9 ist eine Explosionsdarstellung des Multiventils und der anderen Bestandteile gezeigt , welche diesen Anlageteil kennzeichnen , welcher eingens dazu erdacht wurde um den Betankungsprozess sicher und einfach zu gestalten .

Das Multiventil 32 besteht aus einer eigentlichen Multiventilgruppe , elche das Ladeventil , das Auslassventil und den Anzeiger umfasst .

Gerade für die besondere Verwendung des Behälters des Gases , welcher wie gesagt an die Anlage der Dienstleistungen des Campers angeschlossen ist , wurde die in den anliegenden Zeichnungen und insbesondere in der Figur 9 gezeigte Sicherheitsvorrichtung verwirklicht . Die Ladebuchse 33 , in welche im Augenblick der Betankung die Pistole eingeführt wird , ist teilweise von einem Schild 34 geschützt , welches in der normalen Lage die Einführung der Pistole in die Buchse 33 verhindert ; um die Betankung zu tätigen und somit die Pistole in die Buchse 33 einzuführen ist es erforderlich mittels des eigens dazu vorgesehenen Hebels die Buchse 33 abzudecken ,indem das Schild 35 nach ruchwärts gezogen wird . Diese Bewegung des Schildes 35 verursacht die achsiale Gleitung des mit ihm verbundenen Kolbens 36 und den Verschluss des Zuganges des Gases zum Behälter , welcher mit der Anlage der Dienstleistungen des Fahrzeuges in Verbindung steht .

Dieses Sicherheitssystem garantiert unumschränkt die Möglichkeit die Anlage der Dienstleistungen mit Gas in flüssiger Phase aufzuladen , indem im Inneren des Behälters immer ein hinreichendes Volumen gelassen wird , derart dass die enthaltene Flüssigkeit sicher vergasen kann . Diese Vorrichtung schliesst sich weiters an den im Inneren des Behälters angeordneten Schwimmer an , welcher eine Beladung des Behälters selbst mit einer Flüssigkeitsmenge verhindert , welche ungefähr 80% des Gesamtfassungsvermögens des Behälters übersteigt . Nach Beendigung der Betankung , nachdem die Pistole aus dem Ladeventil herausgezogen wurde , wird die Feder 37 den Kolben 36 in die normale Lage zurückführen , indem der Flüssiggasbehälter mit der Anlage der Dienstleistungen wieder in Verbindung gebracht wird .

Wie man aus der Figur 9 entnehmen kann , wird das Gas im Ausfluss aus dem beschriebenen Multiventil mittels der Leitung 11 , bevor es zur Verwendungsanlange gelangt , zu einem in der Figur 10 gezeigten Zweiwegehahn überführt , welcher ein Eingangs- und Absperrventil 39, ein Ausgangs-ventil 40 für die Borddienstleistungen aufweist , was eine weitere Sicherheit darstellt , da es mit einem alleinigen Hahn möglich ist den Zufluss des Gases zu den Dienstleistungen abzusperren.

Vom Ausgang 40 noch bevor es in die Leitung 41 eintritt , welche es zu den Dienstleistungen bringt , wird das Gas durch den Regler 42 geführt .

Es ist einleuchtend , dass ausser den beschriebenen Hähnen , wie man aus der Figur 7 entnehmen kann , auch die im Inneren des Fahrzeuges angeordneten Hähne 43 zugegen sein werden , welche die Absperrung des Gases ermöglichen bevor dieses zu den verschiedenen Verbrauchern gelangt .

Ein letzter Vorteil der beschriebenen Anlage ist dadurch gegeben , dass ein wie beschrieben ausgerüstetes Fahrzeug einfach mit den Vorrichtungen vervollständigt werden kann , welche dem Motor die Verwendung des Flüssiggases als Kraftstoff gestatten , und zu diesem Zweck ist am Multiventil 32 bereits der eigens dazu bestimmte Anschluss vorhanden , welcher den Austritt des Gases in der flüssigen Phase ermöglicht .

**Patentansprüche**

1.)Verbesserungen an den Flüssiggasbehältern und an den Verteilungsventilen für das Flüssiggas , insbesondere für den Selbstantrieb und die besonders geeignete Anwendung für Campers u.dgl. , dadurch gekennzeichnet , dass für die Vereinigung zwischen zwei zu solidarisierende Behälter (4,9) ein Flansch oder Ring (1) vorgesehen ist , welcher gebildet ist aus zwei zylindrischen Teilen (2,3) von Aussendurchmessere im wesentlichen gleich dem Innendurchmesser des Körpers , an dem jeder von diesen angebracht werden muss , und aus einem Zwichenteil (3) von Aussendurchmesser gleich oder grösser als der Aussendurchmesser der vorgenannten Körpers (4,9) .

2.)Verbesserungen , nach Anspruch 1 , dadurch gekennzeichnet , dass der nach aussen des Körpers gewandte Flanschteil (3) mit einer z.B. die Haube des Behälters bildenden geschlossenen Oberfläche (5) endet und/oder sich mit einem zweiten Körper (9) oder Behälter vereint .

3.)Verbesserungen , nach Anspruch 1 , dadurch gekennzeichnet , dass die Anbringung des Flansches (2,3) in oder auf jeden dieser Körper oder Behälter (4,9) die Bildung einer ringförmigen Aushöhlung ( 3 ) gleicher Dicke als die Dicke des Körpers bewirkt , welcher den genannten Ring aufnimmt , welche Ausnehmung bzw. Aushöhlung dazu bestimmt eine Schweissnaht (7) eines jeden Körpers am Ring aufzunehmen .

4.)Verbesserungen , nach Anspruch 1 , dadurch gekennzeichnet , dass der Hauptbehälter (4) mit dem Flansch (1) vervollständigt ist , dessen nach aussen des Behälters gewandte Teil vervollständigt ist mit einer Wand (8) und an welchen Flanschteil , in der Art wie im Anspruch 2 angedeutet , in der insbesondere für Selbstantrieb und Borddienstleistungen geeigneten Ausführung , die beiden Behälter zweckdienlich angeschweisst sind , wobei jeder der Behälter mit dem dazugehörigen Lade-und Entnahmestutzen des Flüssiggases versehen ist, einer der Behälter bildet dabei einen Raum für das Gas und die Dienstleistungen und kann auch vom Gas gespeist werden,das sich im Hauptbehälter bildet.

5.)Verbesserungen , nach einem oder mehreren der vorstehenden Ansprüche , dadurch gekannzeichnet , dass falls das im Behälter (10) enthaltene Flüssiggas nur für den Selbstantriebsgebrauch bestimmt ist der zusätzliche Behälter (11) einen Sicherheitsraum darstellt , wobei ein Sicherheitsventil (13) vorgesehen ist , welcher den eigentlichen Behälter (10) mit dem Sicherheitsraum (11) in Verbindung bringt .

6.)Verbesserungen , nach einem oder mehreren der vorstehenden Ansprüche , dadurch gekennzeichnet , dass falls der Hauptbehälter (10) die Form eines Toroids hat der Mittelraum (11′) zweckmässig geschlossen ist, indem vom genannten Flansch nach aussen vermittels einer Wand (12) Gebrauch gemacht wird , welche vom Flügel des Flansches (2,3) ausgeht und sich mit dem entsprechenden Teil des Behälters fest verbindet , wobei auch in diesem Fall ein Sicherheitsventil (13) vorgesehen ist .

7.)Verteilungsventil , besonders geeignet für Flüssiggasbehälter , dadurch gekennzeichnet , dass es im wesentlichen aus einem Zylinder (17) gebildet ist , welcher von einem Doppelkolben (23,24) in zwei Kammern (20 und 22) unterteilt ist , wobei in jeder dieser Kammern wenigstens ein Flüssiggaseinlauf von einem der beiden getrennten Kraftstoffbehälter (14,15) vorgesehen ist .

8.)Verteilungsventil , nach Anspruch 7 , <u>dadurch gekennzeichnet</u> , dass der Auslauf des Flüssiggases für die Speisung des Motors ein alleiniger (21) ist und mit der einen oder der anderen Kammer (20,22) des Ventils verbunden ist , u.zw. in Abhängigkeit vom Druck , welcher im einen oder im anderen Behälter (14,15) herrscht.

9.)Verteilungsventil , nach einem oder mehreren der Ansprüche 7 und/oder 8 , <u>dadurch gekennzeichnet</u> , dass die beiden äusseren Stirnseiten des Doppelzylinders (23, 24) dem Druck des Flüssiggases beziehungsweise des ersten Behälters (14) und des zweiten Behälters (15) ausgesetzt sind , wobei die Differenz zwischen den beiden Drücken die Speisung des Motors vermittels des einen oder des anderen Behälters bestimmt .

10.)Anlage für die Veranwendung des Ventils , nach einem oder mehreren der vorstehenden Ansprüche , <u>dadurch gekennzeichnet</u> , dass der Hauptbehälter (14) einen einzigen Auslauf (19) für das Flüssiggas besitzt , während der zweite Behälter (15) zwei Auslaufe (26,27) besitzt , von denen der Auslauf (26) an der nach aussen des diesbezüglichen Kolbens (24) gewandten Stirnseite mündet und der andere Auslauf (27) zwischen den beiden gegenüberliegenden Stirnseiten der beiden Kolben (23,24) mündet , die sich im Einklang im alleinigen Zylinder (20) bewegen .

11.)Anlage , besonders geeignet für dir Verwendung in Campers u.dgl. , bestehend aus einem für die Borddienstleistungen und den Selbstantrieb kombinierten Flüssiggasbehälter und der dazuggehörigen Ventilgruppe , <u>dadurch gekennzeichnet</u> , dass sie aus einem Behälter (28) besteht , welcher in seinem Inneren einem Raum zweckdienlichen Fassungsvermögens ausfweist, in dem das durch die Verdampfung der Flüssigkeit hervorgerufene Gas aufgenommen wird, und weiters aus einer Gasflasche (29) besteht , welche diesem in waagrechter Lage zugeordnet ist .

12.)Anlage , nach Anspruch 11 , <u>dadurch gekennzeichnet</u> , dass bei einer bevorzugten Lösung eine mit dem Rahmen des Fahrzeuges fest verbundene Wanne erdacht wurde , auf der der Behälter mit der gesamten Ventilgruppe und die Flasche angeordnet werden , wobei diese Wanne (30) sowohl die Aufgabe hat die Anlage abzustützen als auch die Funktion hat diese vor der von der Auspuffanlage (31) ausstrahlenden Hitze wie auch vor Schmutz zu schützen .

13.)Anlage , nach Anspruch 11 und/oder 12 , <u>dadurch gekennzeichnet</u> , dass um einen sicheren und einfachen Betrieb der Anlage zu gewährleisten ein Multiventil (32) vorgesehen ist , welches aus einer eigentlichen Multiventilgruppe besteht , welche das Ladeventil , das Auslassventil und den Anzeiger umfasst , die Ladebuchse (33) , in welche im Augenblick der Betankung die Pistole eingeführt wird , ist dabei teilweise von einem Schild (34) geschützt , welches in der normalen Lage die Einführung der Pistole in die Buchse verhindert , und um die Pistole in die Buchse (33) einführen und damit die Betankung zu tätigen ist es erforderlich vermittels eines Hebels die Buchse (33) abzudecken , indem das Schild gezogen wird , wobei diese Bewegung die achsiale Gleitung eines mit ihm verbundenen Kolbens (36) und den Verschluss des Zuganges des Gases zum Behälter verursacht , welcher mit der Anlage der Dienstleistungen des Fahrzeuges in Verbindung steht .

14.)Anlage , nach einem oder mehreren der vorstehenden Ansprüche , <u>dadurch gekennzeichnet</u> , dass im Augenblick des Herausziehens der Pistole aus dem Ladeventil eine Feder (37) den Kolben (36) in die normale Lage zurückführt, indem der Flüssiggasbehälter mit der Anlage der Dienstleistungen in Verbindung gesetzt wird .

15.)Für Borddienstleistungen und Selbstantrieb kombinierte Flüssiggasanlage und dazugehörige Ventilgruppe , nach einem oder mehreren der vorstehenden Ansprüche , <u>dadurch gekennzeichnet</u> , dass im Augenblick des Herausziehens der Pistole aus dem Ladeventil die Feder (37) den Kolben (36) in die normale Lage zurückführt, indem der Flüssiggasbehälter mit der Anlage der Dienstleistungen in Verbindung gesetzt wird .

16.)Für Borddienstleistungen und Selbstantrieb kombinierte Flüssiggasanlage und dazugehörige Ventilgruppe , nach einem oder mehreren der vorstehenden Ansprüche , <u>dadurch gekennzeichnet</u> , dass das Gas im Ausfluss aus dem Multiventil mittels einer Leitung (38), bevor es zur Verwendungsanlage gelangt, zu einem Zweiwegehahn überführt wird , welcher ein Eingangs- und Absperrventil (39), ein Ausgansventil (40) für die Borddienstleistungen und ein Sperrventil (41) der Linie der Borddienstleistungen ausweist , ein Hahn welcher eine weitere Sicherheit darstellt , da es mit einem alleinigen Hahn möglich ist den Zufluss des Gases zu den Dienstleistungen abzusperren .

17.)Für Borddienstleistungen und Selbstantrieb kombinierte Flüssiggasanlage und dazugehörige Ventilgruppe , <u>dadurch gekennzeichnet</u> , dass am Multiventil (32) bereits der eigens dazu bestimmte Anschluss (44) vorhanden ist , welcher den Austritt des Gases in der flüssigen Phase ermöglicht um dem Motor die Verwendung des Flüssiggases als Kraftstoff zu gestatten .

F I G. 1

F I G. 2

F I G. 3

F I G. 4

F I G. 4'

F I G. 4"

F I G. 5

F I G. 6

F I G. 7

F I G. 9

F I G. 8

F I G. 10